# EUROPÄISCHE PATENTSCHRIFT

(11) **EP 1 331 418 B1**
(45) Veröffentlichungstag und Bekanntmachung des Hinweises auf die Patenterteilung: **21.03.2007**
(21) Anmeldenummer: 03000295.0
(22) Anmeldetag: 09.01.2003
(51) Int. Cl.: F15B 15/14, F16F 9/32, F16F 9/38

(54) **Kolben-Zylinder-Einheit sowie Verfahren zu deren Herstellung**
Piston-cylinder unit and method for manufacturing the same
Ensemble piston-cylindre et méthode de fabrication d'un tel ensemble

(30) Priorität: 24.01.2002 DE 10202529
(43) Veröffentlichungstag der Anmeldung: 30.07.2003
(73) Patentinhaber: SUSPA Holding GmbH, 90518 Altdorf (DE)
(72) Erfinder: Krog, Andreas, 90610 Winkelhaid (DE)
(74) Vertreter: Rau, Albrecht

(56) Entgegenhaltungen:
- EP-A- 0 364 851
- DE-A1- 4 209 985
- DE-U- 8 208 431
- DE-U- 29 806 048

## Beschreibung

Die Erfindung betrifft eine Kolben-Zylinder-Einheit, insbesondere eine Gasfeder, sowie ein Verfahren zur Herstellung einer korrosionsgeschützten Kolben-Zylinder-Einheit.

Gasfedern sind in großer Zahl seit langem bekannt und werden in der Praxis beispielsweise als Heckklappen-Gasfedern an Automobilen eingesetzt. Die Metallgehäuse von Gasfedern werden nach der Montage der Gasfeder lackiert. Der umgebördelte Rand des Gehäuses kann vor allem bei einer elektrostatischen Lackierung nicht vollständig lackiert werden, so dass bei einer längeren Nutzung Korrosionsprobleme entstehen.

Aus der EP 0 364 851 A1 sind mehrere Ausführungsformen von Abschluss-Kappen für Gasfedern bekannt. Die Abschluss-Kappen weisen jeweils eine Manschette auf, die einen nach innen gebogenen Gehäuserand eines Gasfeder-Gehäuses außenseitig umgreift. Die Abschluss-Kappen weisen einen Schnapp-Ring auf, der mit einer an dem Gehäuserand anliegenden Kolbenstangen-Führungs-Einheit in Anlage bringbar ist. Nachteilig bei diesen bekannten Abschluss-Kappen ist die mangelhafte erzielbare Dichtigkeit.

Die DE 42 09 985 A1 offenbart eine Kolben-Zylinder-Einheit, die ein Gehäuse mit einem nach innen gebogenen Gehäuserand aufweist. An dem Ende des Gehäuses ist ein Ring-Element angeordnet, das einen zwischen dem Gehäuserand und einer Kolbenstange ausgebildeten Zwischenraum eingreifenden Ring-Fortsatz aufweist. Ein Schrumpfschlauch überdeckt sowohl das Gehäuse als auch das Ring-Element. Auch bei dieser Gasfeder treten Dichtigkeitsprobleme auf.

In der DE 82 08 431 U1 ist eine Gasfeder offenbart, die ein Abschluss-Teil umfasst. Dieses weist eine Ringnut auf, in die ein nach innen gebogener Gehäuserand eines Gasfeder-Gehäuses eingreift. Die Dichtigkeit dieser Gasfeder lässt zu wünschen übrig.

Aus der DE 298 06 048 U1 ist eine Gasfeder bekannt. Diese weist eine Führungs-Büchse auf, die an einem Ende eines Gasfeder-Gehäuses angeordnet ist.

Der Erfindung liegt die Aufgabe zugrunde, eine Kolben-Zylinder-Einheit zu schaffen, die korrosionsunempfindlich ist.

Die Aufgabe wird bei einer Kolben-Zylinder-Einheit gemäß dem Oberbegriff des Anspruches 1 durch die Merkmale des kennzeichnenden Teils des Anspruchs 1 sowie durch das Verfahren gemäß Anspruch 4 gelöst. Der Kern der Erfindung besteht darin, am nach innen gebogenen Gehäuserand eine Kunststoff-Hülse mit einer Manschette zu befestigen, die den äußeren und inneren Gehäuserand umgreift.

Weitere vorteilhafte Ausgestaltungen der Erfindung ergeben sich aus den Unteransprüchen.

Zusätzliche Merkmale und Einzelheiten der Erfindung ergeben sich aus der Beschreibung eines Ausführungsbeispiels anhand der Zeichnungen. Es zeigen:
- Fig. 10a bis 10c: x eine Längsansicht einer Gasfeder in teilweiser aufgebrochener Darstellung und

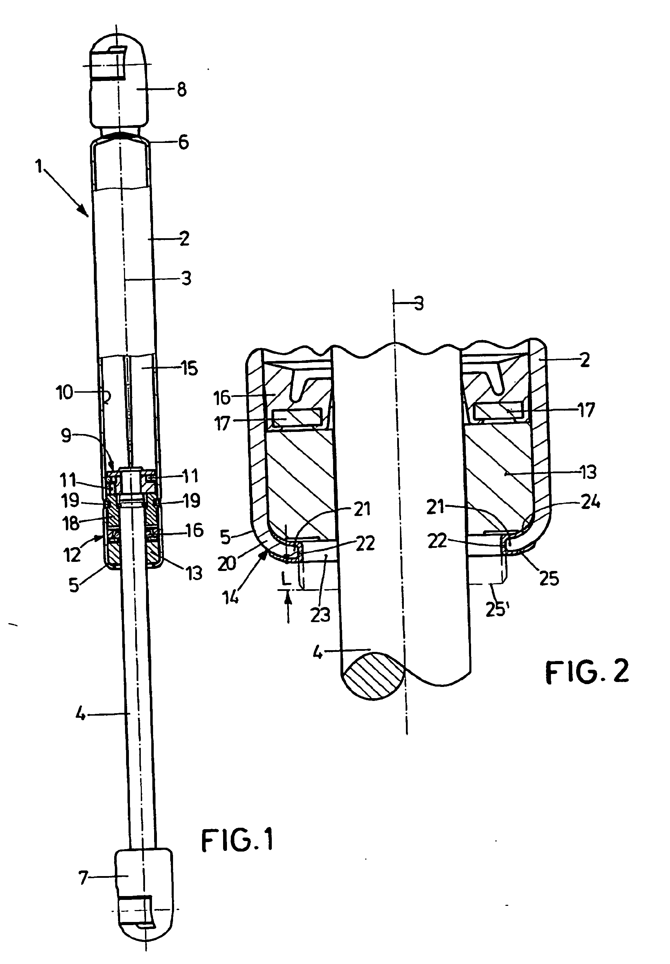

- Fig. 2: eine Ausschnittvergrößerung eines Längsschnitts der Gasfeder gemäß Fig. 1.

Eine als Kolben-Zylinder-Einheit ausgebildete Gasfeder 1 weist ein im wesentlichen aus einem zylindrischen Rohr bestehendes, mit Druckgas gefülltes Gehäuse 2 mit einer Mittel-Längs-Achse 3 und einer koaxial zur Achse 3 angeordneten, im Gehäuse 2 verschiebbaren Kolbenstange 4 auf. Die Kolbenstange 4 ist an einem ersten Ende 5 des Gehäuses 2 aus diesem herausgeführt. Am zweiten Ende 6 ist das Gehäuse 2 gasdicht verschlossen. Am freien äußeren Ende der Kolbenstange 4 und am zweiten Ende 6 des Gehäuses 2 sind jeweils Befestigungs-Elemente 7, 8 beispielsweise in Form sogenannter Kugelpfannen angebracht.

An ihrem im Gehäuse 2 befindlichen Ende ist die Kolbenstange 4 mit einem Kolben 9 versehen, der an der Innenwand 10 des Gehäuses 2 geführt ist. Der Kolben 9 ist als sogenannter Dämpfungskolben ausgebildet und weist hierzu Dämpfungs-Kanäle 11 auf, die beim Einschieben der Kolbenstange 4 in das Gehäuse 2 bzw. beim Ausfahren der Kolbenstange 4 aus dem Gehäuse 2 von dem Gas durchströmt werden. Für das Einschieben und Ausfahren können verschiedenen Dämpfungscharakteristiken eingestellt werden. Derartige Kolben 9 sind allgemein bekannt und in der Praxis weit verbreitet.

Die Kolbenstange 4 ist am ersten Ende 5 des Gehäuses 2 durch eine das Gehäuse 2 abschließende Führungs-Dichtungs-Schmier-Einheit 12 geführt, wobei die Einheit 12 auch ohne die Schmierfunktion ausgebildet sein kann. Die Einheit 12 weist einen dem ersten Ende 5 direkt zugewandten, an der Innenwand 10 des Gehäuses abgestützten Führungsring 13 auf, in dem die Kolbenstange 4 konzentrisch zur Achse 3 radial angenähert spielfrei, aber in Richtung der Achse 3 verschiebbar geführt ist. Der Führungsring 13 ist durch einen umgebördelten Rand 14 des Gehäuses 2 gegen ein Herausrutschen aus dem Gehäuse 2 gesichert. Weiterhin ist zwischen dem Führungsring 13 und dem Innenraum 15 des Gehäuses 2 eine doppelt wirkende Dichtung 16 angeordnet, die einerseits gegen die Innenwand 10 des Gehäuses 2 und andererseits gegen die Kolbenstange 4 dichtend anliegt. Diese Dichtung 16 ist mit einem Verstärkungsring 17, beispielsweise aus Metall, verstärkt. Die Dichtung 16 und der Führungsring 13 werden durch den Gasdruck im Gehäuse 2 gegen den Rand 14 gedrückt. Die Einheit 12 wird zum Innenraum 15 des Gehäuses 2 hin durch ein hülsenförmiges Zwischenstück 18 abgeschlossen, das in Richtung der Achse 3 gegenüber dem Gehäuse 2 durch Vertiefungen 19 festgelegt ist, die durch eine Sicke oder durch punktweise, die über den Umfang des Gehäuses verteilte Eindrückungen gebildet sein können. Gegen dieses Zwischenstück 18 kommt bei völlig ausgefahrener Kolbenstange 4 der Kolben 9 zur Anlage.

Der umgebördelte Rand 14 weist einen sich an das zylindrische Gehäuse 2 anschließenden gekrümmten Abschnitt 20 sowie einen radial nach innen vorstehenden Abschnitt 21 auf, der eine der Kolbenstange 4 zugewandte Innenfläche 22 aufweist. An dem Rand 14 ist eine Kunststoff-Hülse 23 befestigt, die eine gehäuseinnenseitige innere Manschette 24 und eine gehäuseaußenseitige äußere Manschette 25 aufweist. Beide Manschetten 24 und 25 sowie die Kunststoff-Hülse 23 umgreifen den Rand 14. Die innere Manschette 24 liegt auf der Innenseite des Randes 14 flüssigkeitsdicht an und erstreckt sich bis zu dem Bereich, wo der gekrümmte Abschnitt 20 in den zylindrischen Teil des Gehäuses 2 übergeht. Eine andere Ausdehnung der Manschette 24 ist auch möglich. Die äußere Manschette 25 liegt flüssigkeitsdicht auf der Außenseite des Randes 14 an und erstreckt sich mindestens bis zur Mitte des gekrümmten Abschnitts 20. Typischerweise weist die äußere Manschette 25 eine Länge L auf, für die gilt: 2 mm ≤ L ≤ 10 mm. Die Außenseite des Gehäuses 2 ist mit einer Korrosions-Schutzschicht überzogen, wobei es sich hierbei beispielsweise um eine Pulverlackierung oder einen 3-Komponenten-Wasserlack handelt. Die Korrosions-Schutzschicht erstreckt sich zumindest teilweise unter die äußere Manschette 25. Die Länge der Manschette 25 ist somit so gewählt, dass sie zumindest bis zu dem fehlerfrei lackierten Bereich des Randes 14 reicht und diese nach Möglichkeit teilweise auch noch überdeckt. Der Kunststoff der Hülse 23 ist vorteilhafterweise so gewählt, dass er sich mit der Korrosions-Schutzschicht verbindet.

Im folgenden wird die Herstellung der im Bereich des ersten Endes 5 korrosionsgeschützten Gasfeder 1 genauer beschrieben. Eine in Fig. 1 dargestellte Gasfeder 1 wird in üblicher Weise montiert. Die Kunststoff-Hülse 23 weist hierbei, wie in Fig. 2 gestrichelt dargestellt, eine sich axial nach außen erstreckende, ringzylindrische Manschette 25' auf. Die gesamte Au-ßenseite des Randes 14 ist somit nicht von der Kunststoff-Hülse 23 bedeckt ist. Anschließend wird das Gehäuse 2 elektrostatisch aufgeladen und lackiert. Aufgrund der Umbördelung des Randes 14 gelangt Lack nicht bis zum äußersten Ende des Randes 14, wodurch bei herkömmlichen Gasfedern Korrosionsprobleme entstehen. Nach Abschluss der Lackierung wird die Manschette 25' in die Position der Manschette 25 umgelegt, so dass der möglicherweise nicht vollständig mit Lack bedeckte Bereich des Randes 14 durch die Kunststoff-Manschette 25 flüssigkeitsdicht abdeckt wird. Das Umlegen der Manschette 25' geschieht durch die Einwirkung von Wärme, weshalb als Material für die Kunststoff-Hülse 23 und die Manschette 25 ein Thermoplast gewählt wird. Der Kunststoff ist derart gewählt, dass er sich mit dem aufgebrachten Lack verbindet. Es ist auch möglich, die Manschette 25 mechanisch umzulegen. Durch die Abdeckung des nicht oder nur teilweise lackierten Randes 14 mit der Manschette 25 ist der Rand 14 vor Korrosion geschützt.

Es ist möglich die äußere Manschette 25 aus einem leitfähigen Kunststoff vorzusehen. Dies hat beim elektrostatischen Lackieren den Vorteil, dass die Randeffekte, die zu einer nicht vollständigen Lackierung des Randes 14 führen, reduziert werden, da in diesem Fall auch die äußere Manschette 25 Lack anzieht.

## Patentansprüche

1. Kolben-Zylinder-Einheit, insbesondere Gasfeder,
a. mit einem eine Mittel-Längs-Achse (3) aufweisenden, im wesentlichen zylindrischen Gehäuse (2), welches aufweist
i. ein erstes Ende (5) mit einem nach innen gebogenen Gehäuserand (14),
ii. ein verschlossenes zweites Ende (6), und
iii. einen mit einem Arbeits-Medium gefüllten Innenraum (15),
b. mit einer in dem Gehäuse (2) im Bereich des ersten Endes (5) angeordneten, durch den nach innen gebogenen Gehäuserand (14) nach außen abgestützten Führungs-Einheit (13),
c. mit einer Kolbenstange (4),
i. die koaxial zur Mittel-Längs-Achse (3) angeordnet ist,
ii. die durch die Führungs-Einheit (13) verschiebbar geführt ist, und
iii. die am innenraumseitigen Kolbenstangen-Ende einen Kolben (9) trägt,
d. mit einer am Gehäuserand (14) befestigten Hülse (23), die mindestens eine erste Manschette (25) aufweist, die den Gehäuserand (14) auf der Außenseite des Gehäuses (2) flüssigkeitsdicht umgreift, wobei die erste Manschette (25) die Außenseite des nach innen gebogenen Gehäuserands (14) abdeckt, und
**dadurch gekennzeichnet, dass**
e. die Hülse (23) aus Kunststoff besteht,
f. der von der ersten Manschette (25) abgedeckte Teil der Außenseite des Gehäuses (2) zumindest teilweise mit einer Korrosions-Schutzschicht überzogen ist und
g. die Hülse (23) eine zweite Manschette (24) aufweist, die den Gehäuserand (14) auf der Innenseite des Gehäuses (2) umgreift.

2. Kolben-Zylinder-Einheit gemäß einem der vorangehenden Ansprüche, **dadurch gekennzeichnet, dass** die Außenseite des Gehäuses (2) mit einer Korrosions-Schutzschicht elektrostatisch beschichtet ist.

3. Kolben-Zylinder-Einheit gemäß Anspruch 2, **dadurch gekennzeichnet, dass** die Kunststoff-Hülse (23) zumindest teilweise aus einem elektrisch leitenden Kunststoff besteht.

4. Verfahren zur Herstellung einer korrosionsgeschützten Kolben-Zylinder-Einheit umfassend die folgenden Schritte:
a. Bereitstellen einer Kolben-Zylinder-Einheit
i. mit einem eine Mittel-Längs-Achse (3) aufweisenden, im wesentlichen zylindrischen Gehäuse (2), welches ein erstes Ende (5) mit einem nach innen gebogenen Gehäuserand (14), ein verschlossenes zweites Ende (6), und einen mit einem Arbeits-Medium gefüllten Innenraum (15) aufweist,
ii. mit einer in dem Gehäuse (2) im Bereich des ersten Endes (5) angeordneten, durch den nach innen gebogenen Gehäuserand (14) nach außen abgestützten Führungs-Einheit (13),
iii. mit einer Kolbenstange (4), die koaxial zur Mittel-Längs-Achse (3) angeordnet ist, die durch die Führungs-Einheit (13) verschiebbar geführt ist, und die am innenraumseitigen Kolbenstangen-Ende einen Kolben (9) trägt, und
iv. mit einer am Gehäuserand (14) befestigten Kunststoff-Hülse (23), welche eine ringförmige, in axialer Richtung nach außen vorstehende, erste Manschette (25) aufweist,
b. Beschichten der Außenseite des Gehäuses (2) mit einer Korrosions-Schutzschicht, und
c. Umlegen der ersten Manschette (25), so dass diese den Gehäuserand (14) umgreift.

5. Verfahren gemäß Anspruch 4, **dadurch gekennzeichnet, dass** das Umlegen der Manschette (25) mechanisch und/oder unter Wärmeeinwirkung erfolgt.

## Claims

1. A piston-cylinder unit, in particular a gas spring, comprising
a. a substantially cylindrical casing (2) with a central longitudinal axis (3), which has
i. a first end (5) with an edge (14) that is bent inwards,
ii. a closed second end (6), and
iii. an inner space (15) that is filled with a working fluid;
b. a guide unit (13), which is disposed in the casing (2) in the vicinity of the first end (5) and which is supported outwards by the inwardly bent edge (14);
c. a piston rod (4),
i. which is coaxial to the central longitudinal axis (3),
ii. which is displaceably passed through the guide unit (13), and
iii. which has a piston (9) on the end of the piston rod (4) that is on the side of the interior space;
d. a sleeve (23), being attached to the edge (14), the sleeve (23) having at least a first cuff (25) that enfolds liquid tightly the edge (14) on the outside of the casing (2), the first cuff (25) covering the outside of the inwardly bent edge (14), and
**characterized in that**
e. the sleeve (23) is made of plastic material,
f. the part of the outside of the casing (2) that is covered by the first cuff (25) is coated at least partially with an anticorrosive layer and
g. the sleeve (23) comprises a second cuff (24) which enfolds the edge (14) on the inside of the casing (2).

2. A piston-cylinder unit according to claim 1, **characterized in that** the outside of the casing (2) is electrostatically coated with an anticorrosive layer.

3. A piston-cylinder unit according to claim 2, **characterized in that** the plastic sleeve (23) consists at least partially of electrically conductive plastic material.

4. A method for the manufacture of an anticorrosive piston-cylinder unit, comprising the following steps:
a. providing a piston-cylinder unit, which comprises
i. a substantially cylindrical casing (2) with a central longitudinal axis (3), the casing (2) having a first end (5) with an inwardly bent edge (14), a closed second end (6) and an inner space (15) that is filled with a working fluid,
ii. a guide unit (13), which is disposed within the casing (2) in the vicinity of the first end (5) and supported outwards by the inwardly bent edge (14),
iii. a piston rod (4), which is coaxial to the central longitudinal axis (3) and which is displaceably passed through the guide unit (13) and the end of which on the side of the interior space has a piston (9), and
iv. a plastic sleeve (23), which is mounted on the edge (14) and has an annular first cuff (25) that projects outwards in the axial direction;
b. coating the outside of the casing (2) with an anticorrosive layer; and
c. bending the first cuff (25) so that it enfolds the edge (14).

5. A method according to claim 4, **characterized in that** bending the cuff (25) takes place mechanically and/or by the action of heat.

## Revendications

1. Ensemble piston/cylindre, en particulier ressort à gaz,
a. avec un boîtier (2) essentiellement cylindrique comportant un axe médian longitudinal (3) qui comporte
i. une première extrémité (5) avec un bord de boîtier (14) courbé vers l'intérieur,
ii. une deuxième extrémité fermée (6) et
iii. un espace intérieur (15) rempli d'un fluide de fonctionnement,
b. avec une unité de guidage (13) disposée dans le boîtier (2) dans la zone de la première extrémité (5), soutenue vers l'extérieur par le bord de boîtier (14) courbé vers l'intérieur,
c. avec une tige de piston (4),
i. qui est disposée de manière coaxiale par rapport à l'axe médian longitudinal (3),
ii. qui est guidée de manière mobile par l'unité de guidage (13) et
iii. qui porte à l'extrémité de tige de piston côté espace intérieur un piston (9),
d. avec une douille (23) fixée sur le bord du boîtier (14), qui comporte au moins une première manchette (25) qui entoure le bord du boîtier (14) sur la face extérieure du boîtier (2) de telle manière qu'il est étanche aux liquides, la première manchette (25) couvrant la face extérieure du bord du boîtier (14) courbé vers l'intérieur, et
**caractérisé en ce que**
e. la douille (23) est composée de matière plastique,
f. la partie de la face extérieure du boîtier (2) recouverte par la première manchette (25) est au moins partiellement recouverte d'une couche de protection contre la corrosion, et
g. la douille (23) comporte une deuxième manchette (24) qui entoure le bord du bâti (14) sur la face intérieure du bâti (2).

2. Ensemble piston/cylindre selon la revendication 1, **caractérisé en ce que** la face extérieure du bâti (2) est revêtue d'une couche électrostatique de protection contre la corrosion.

3. Ensemble piston/cylindre selon la revendication 2, **caractérisé en ce que** la douille en matière plastique (23) est au moins partiellement composée d'une matière plastique électroconductrice.

4. Méthode de fabrication d'un ensemble piston/cylindre protégé contre la corrosion comprenant les étapes suivantes:
a. fourniture d'un ensemble piston/cylindre
i. avec un bâti (2) essentiellement cylindrique comportant un axe médian longitudinal (3) qui comporte une première extrémité (5) avec un bord de bâti (14) courbé vers l'intérieur, une deuxième extrémité (6) fermée et un espace intérieur (15) rempli d'un fluide de fonctionnement,
ii. avec une unité de guidage (13) disposée dans le bâti (2) dans la zone de la première extrémité (5) étayée vers l'extérieur par le bord de bâti (14) courbé vers l'intérieur,
iii. avec une tige de piston (4) disposée de manière coaxiale par rapport à l'axe médian longitudinal (3), qui est guidée de manière mobile par l'unité de guidage (13) et porte un piston (9) à l'extrémité de piston côté espace intérieur, et
iv. avec une douille en matière plastique (23) fixée sur le bord du bâti (14) qui comporte une première manchette (25) en forme d'anneau qui dépasse à l'extérieur dans le sens axial,
b. revêtement de la face extérieure du bâti (2) avec une couche de protection contre la corrosion, et
c. rabattement de la première manchette (25) de telle manière que celle-ci entoure le bord du bâti (14).

5. Méthode selon la revendication 4, **caractérisée en ce que** le rabattement de la manchette (25) a lieu de manière mécanique et/ou sous l'effet de la chaleur.
